# EUROPÄISCHE PATENTSCHRIFT

(11) **EP 4 448 870 B1**
(45) Veröffentlichungstag und Bekanntmachung des Hinweises auf die Patenterteilung: **27.08.2025**
(21) Anmeldenummer: 22835278.7
(22) Anmeldetag: 09.12.2022
(51) Int. Cl.: E01B 27/00, E01B 27/16, E01B 27/17, E01B 27/20, E01B 31/13, E01B 31/17, B60L 1/00, B60L 50/50, B60L 50/53, B60L 50/60, B60L 50/64

(54) **VERFAHREN UND SCHIENENFAHRZEUG ZUM DURCHFÜHREN VON ARBEITEN AN EINER GLEISANLAGE**
METHOD AND RAIL VEHICLE FOR CARRYING OUT WORK ON A TRACK SYSTEM
PROCÉDÉ ET VÉHICULE FERROVIAIRE DE RÉALISATION D'UN TRAVAIL SUR UN SYSTÈME DE VOIE FERRÉE

(30) Priorität: 14.12.2021 AT 509982021
(43) Veröffentlichungstag der Anmeldung: 23.10.2024
(73) Patentinhaber: Plasser & Theurer, Export von Bahnbaumaschinen, Gesellschaft m.b.H., 1010 Wien (AT)
(72) Erfinder: DEMML, Marc, 4048 Puchenau (AT); KRENN, Stefan, 4163 Klaffer am Hochficht (AT)
(86) Internationale Anmeldenummer: PCT/EP2022/085089
(87) Internationale Veröffentlichungsnummer: WO 2023/110651

(56) Entgegenhaltungen:
- DE-A1- 102019 213 662

## Beschreibung

### Technisches Gebiet

Die Erfindung betrifft ein Verfahren zum Durchführen von Arbeiten an einer Gleisanlage mit einem Schienenfahrzeug, das einen Gleiskraftwagen mit mindestens einer elektrisch betreibbaren Bearbeitungseinrichtung und einer Energieversorgungseinrichtung zur Bereitstellung elektrischer Energie, sowie einen an den Gleiskraftwagen angekoppelten Anhängewagen mit einer Energiespeichereinrichtung zur Bereitstellung elektrischer Energie umfasst, wobei das Schienenfahrzeug zu einer zu bearbeitenden Gleisstelle gefahren wird, wobei der Anhängewagen vom Gleiskraftwagen entkoppelt wird und wobei die zu bearbeitende Gleisstelle mittels des Gleiskraftwagens bearbeitet wird. Zudem betrifft die Erfindung ein entsprechendes Schienenfahrzeug.

### Stand der Technik

Aus der DE 10 2019 213 662 A1 sind ein gattungsgemäßes Verfahren und ein entsprechendes Schienenfahrzeug bekannt. Das Schienenfahrzeug umfasst einen Gleiskraftwagen und einen Anhängewagen, wobei der Gleiskraftwagen eine Einrichtung zur Gleisbearbeitung aufweist. Beide Wagen sind mit einer eigenen Energieversorgungseinrichtung zur Bereitstellung elektrischer Energie ausgestattet, wobei eine Energiespeichereinrichtung des Gleiskraftwagens aus einer Energiespeichereinrichtung des Anhängewagens aufladbar ist. Während eines Bearbeitungsvorgangs ist der Gleiskraftwagen vom Anhängewagen abgekoppelt. Dabei bleibt der Anhängewagen am Gleis abgestellt.

### Darstellung der Erfindung

Der Erfindung liegt die Aufgabe zugrunde, ein Verfahren der eingangs genannten Art dahingehend zu verbessern, dass eine flexiblere und effizientere Bearbeitung des Gleises mittels des Schienenfahrzeugs ermöglicht wird. Weiter ist es eine Aufgabe der Erfindung, ein entsprechendes Schienenfahrzeug anzugeben.

Erfindungsgemäß werden diese Aufgaben gelöst durch die Merkmale der unabhängigen Ansprüche 1 und 9. Abhängige Ansprüche geben vorteilhafte Ausgestaltungen der Erfindung an.

Dabei wird vor und/oder nach der Bearbeitung mittels des Gleiskraftwagens die Gleisstelle mittels des abgekuppelten Anhängewagens bearbeitet, indem ein elektrischer Traktionsantrieb des Anhängewagens und eine Bearbeitungseinrichtung des Anhängewagens aus der Energiespeichereinrichtung mit elektrischer Energie versorgt werden. Auf diese Weise wird der Anhängewagen autonom zur Gleisbearbeitung genutzt. Dabei werden Arbeiten durchgeführt, die vor und/oder nach einer Gleisbearbeitung durch den Gleiskraftwagen erforderlich sind. Beide Wagen nutzen im abgekoppelten Betriebsmodus ihre eigene Energieversorgung, wobei wenigstens der Anhängewagen völlig abgasfrei betrieben wird. Nach einer Durchführung der Arbeiten wird der Anhängewagen wieder an den Gleiskraftwagen gekoppelt. Somit sind für die Gleisbearbeitung zwei autonome Gleisbearbeitungsmaschinen einsetzbar. Zulassungsrelevante Anforderungen für Fahrten im öffentlichen Schienennetz gelten hingegen für das gesamte Schienenfahrzeug, weil solche Überstellfahrten im gekoppelten Betrieb durchgeführt werden. Deshalb muss lediglich der Gleiskraftwagen mit entsprechenden Einrichtungen für ein Zugbeeinflussungssystem (z.B. ETCS) und mit Zugfunkeinrichtungen ausgestattet sein.

In einer Weiterbildung des Verfahrens wird der Gleiskraftwagen über einen Stromabnehmer aus einer Oberleitung mit elektrischer Energie versorgt, wobei der Gleiskraftwagen einen elektrischen Traktionsantrieb aufweist. Auf diese Weise wird auch der Gleiskraftwagen abgasfrei betrieben. Dabei ist sinnvollerweise im Gleiskraftwagen ein elektrischer Energiespeicher angeordnet, um die elektrische Energieversorgung bei Unterbrechungen der Oberleitung oder bei einer Absenkung des Stromabnehmers an Überleitstellen aufrecht zu erhalten.

Vorteilhafterweise wird die Energiespeichereinrichtung des Anhängewagens im gekoppelten Zustand über die Energieversorgungseinrichtung des Gleiskraftwagens aufgeladen. Das erlaubt eine kompakte Bauweise, weil im Anhängewagen keine eigene Versorgungseinrichtung zum Aufladen der Energiespeichereinrichtung erforderlich ist. Bei besonders platzsparender Bauweise des Anhängewagens ist die gesamte Ladeschaltung für die Energiespeichereinrichtung im Gleiskraftwagen angeordnet. Eine Verbindung zur Energiespeichereinrichtung besteht im gekoppelten Zustand über ein geeignetes Ladekabel und einen Ladestecker.

Bei einer bevorzugten Variante wird mittels des Anhängewagens in einer Ausgestaltung als Schotterplaniermaschine während einer Gleisbearbeitung ein gewünschtes Schotterprofil hergestellt. Im abgekoppelten Betrieb wird die Schotterplaniermaschine mit einer erforderlichen Vorwärtsgeschwindigkeit zur dynamischen Umlagerung der Schotterkörner betrieben. Davon unabhängig arbeitet der Gleiskraftwagen mit eigener Vorwärtsgeschwindigkeit.

Weitere Vorteile des Verfahrens ergeben sich, wenn mittels des Gleiskraftwagens in einer Ausgestaltung als Stopfmaschine während einer Gleisbearbeitung Schwellen unterstopft werden und wenn dabei insbesondere die gesamte Stopfmaschine zyklisch vorwärtsbewegt wird. Eine zyklische Arbeitsweise der Stopfmaschine bewirkt keine Einschränkungen für die Arbeitsweise des abgekoppelten Anhängewagens. Dieser wird kontinuierlich vorwärtsbewegt, um beispielsweise ein Schotterbett zu profilieren oder zu stabilisieren. Des Weiteren ist eine kontinuierliche Bearbeitung der Schienen des Gleises mittels des Anhängewagens unabhängig von der Vorwärtsbewegung der Stopfmaschine möglich. Auch bei kontinuierlicher Arbeitsweise der Stopfmaschine mit einem Satelliten ist der unabhängige Betrieb des Anhängewagens sinnvoll, weil damit unterschiedliche Vorwärtsgeschwindigkeiten ermöglicht werden.

In einem vorteilhaften Betrieb des Schienenfahrzeugs wird der Anhängewagen während eines Bearbeitungsbetriebs mittels einer automatisierten und/oder fernsteuerbaren Koppelvorrichtung von dem Gleiskraftwagen entkoppelt und nach Durchführung einer Gleisbearbeitung wieder an den Gleiskraftwagen gekoppelt. Auf diese Weise ergibt sich eine hohe Flexibilität beim Einsatz beider Wagen. In einer gemeinsamen kontinuierlichen Arbeitsweise bleibt die Kopplung bestehen, wobei insbesondere die Energiespeichereinrichtung des Anhängewagens über den Gleiskraftwagen aufgeladen wird. Zwischendurch ist jederzeit eine entkoppelte Arbeitsweise möglich, ohne den Bearbeitungsbetrieb zu unterbrechen. Dafür sorgt der automatisierte bzw. ferngesteuerte Koppelvorgang.

Bei einer weiteren Verbesserung werden insbesondere im entkoppelten Betrieb zwischen dem Gleiskraftwagen und dem Anhängewagen Steuerungsdaten über eine kabellose Datenverbindung ausgetauscht. Mit dieser Maßnahme ist eine automatisierte Koordination der von beiden Wagen separat ausgeführten Arbeiten durchführbar.

In einer weiteren bevorzugten Variante wird das gesamte Schienenfahrzeug im gekoppelten Betrieb aus der Energiespeichereinrichtung des Anhängewagens mit elektrischer Energie versorgt. Damit wird ein emissionsfreier Betrieb des gesamten Schienenfahrzeugs ermöglicht, wenn keine Oberleitung vorhanden ist und wenn im Gleiskraftwagen kein eigener Energiespeicher angeordnet ist. Zudem erlaubt diese Betriebsart eine optimale Nutzung der Energieversorgungseinrichtung im Gleiskraftwagen. Lastspitzen der elektrischen Verbraucher werden mittels der elektrischen Energiespeichereinrichtung des Anhängewagens abgedeckt. Eine Grundlast wird im Gleiskraftwagen mittels eines Verbrennungsmotors im optimalen Drehzahlbereich oder mittels Brennstoffzellen mit optimalem Wirkungsgrad bereitgestellt. Damit ergibt sich insgesamt eine Optimierung aller Komponenten des im Schienenfahrzeug implementierten Energieversorgungssystems.

Das erfindungsgemäße Schienenfahrzeug zur Durchführung eines der beschriebenen Verfahren umfasst einen Gleiskraftwagen mit mindestens einer elektrisch betreibbaren Bearbeitungseinrichtung und einer Energieversorgungseinrichtung zur Bereitstellung von elektrischer Energie sowie einen Anhängewagen mit einer Energiespeichereinrichtung zur Bereitstellung von elektrischer Energie, wobei der Anhängewagen einen eigenen Traktionsantrieb und eine eigene elektrisch betreibbare Bearbeitungseinrichtung umfasst. Auf diese Weise sind der Gleiskraftwagen und der Anhängewagen sowohl gemeinsam im gekoppelten Zustand als auch voneinander separat zur Bearbeitung eines Gleises einsetzbar.

In einer vorteilhaften Weiterbildung ist der Anhängewagen als Schotterplaniermaschine ausgebildet, welche insbesondere einen Mittelpflug, einen Flankenpflug, eine Kehrbürste und einen Schotterspeicher umfasst. Eine solche Schotterplaniermaschine wird in der Regel während einer Arbeitsschicht nicht durchgängig als separat am Gleis fahrender Wagen benötigt. Die Energiespeichereinrichtung der Schotterplaniermaschine muss deshalb nicht für eine ganze Arbeitsschicht ausgelegt sein, weil zwischendurch eine Aufladung über den Gleiskraftwagen erfolgt.

Der Gleiskraftwagen ist vorteilhafterweise als Stopfmaschine ausgebildet, welche insbesondere zur zyklischen Vorfahrt von Schwelle zu Schwelle vorgesehen ist. Mit einem entsprechenden Schienenfahrzeug ist eine effiziente Durcharbeitung eines Gleisabschnittes durchführbar. Beispielsweise wird mit einem als Schotterplaniermaschine ausgebildeten Anhängewagen vor einem Stopfvorgang Schotter in Richtung Gleismitte verlagert. Nach der Bearbeitung durch die Stopfmaschine wird das Gleis mittels der Schotterplaniermaschine gekehrt und gepflügt, um ein konsistentes Gleisbett herzustellen. In einer anderen Variante ist der Anhängewagen als sogenannter Dynamischer Gleisstabilisator ausgebildet. Damit wird das Gleis nach einem Stopfvorgang stabilisiert, um Setzungen durch den Zugsverkehr vorwegzunehmen.

Eine weitere Verbesserung zeichnet sich dadurch aus, dass zur Koppelung des Anhängewagens an den Gleiskraftwagen eine automatisiert und/oder ferngesteuert betätigbare Koppelvorrichtung mit mechanischen Verbindungselementen und mit elektrischen Verbindungselementen angeordnet ist und dass insbesondere sowohl am Gleiskraftwagen als auch am Anhängewagen an beiden Stirnseiten eine solche Koppelvorrichtung angeordnet ist. Mit einer entsprechenden Koppelvorrichtung sind am Gleis keine Bedienpersonen notwendig, um ein Entkoppeln und ein Koppeln der beiden Schienenfahrzeugteile durchzuführen. Das steigert die Effizienz und die Personensicherheit bei der Durchführung von Gleisarbeiten mit mehreren Arbeitsdurchgängen.

In einer bevorzugten Variante ist als Koppelvorrichtung eine Mittelpufferkupplung mit einer elektrischen Schnittstelle angeordnet. Für eine solche Mittelpufferkupplung sind sichere Lösungen für automatisierte mechanische Koppelvorgänge bekannt. Während eines Koppelvorgangs greifen lösbare mechanische Verbindungselemente ineinander. Ergänzt werden diese mechanischen Verbindungselemente mit lösbaren elektrischen Verbindungselementen zu Bildung der elektrischen Schnittstelle für die Übertragung von elektrischer Energie zwischen den Schienenfahrzeugteilen.

Vorteilhafterweise umfasst der Gleiskraftwagen einen Stromabnehmer zur elektrischen Energieversorgung aus einer Oberleitung. Bei einem zu bearbeitenden Gleis mit aktiver Oberleitung ist das gesamte Schienenfahrzeug abgasfrei betreibbar, sowohl im gekoppelten Betrieb als auch im voneinander separaten Betrieb.

Zur Bearbeitung eines Gleises ohne aktiver Oberleitung oder mit fehlender Oberleitung umfasst der Gleiskraftwagen sinnvollerweise einen Verbrennungsmotor und einen damit gekoppelten Generator zur elektrischen Energieversorgung. Auf diese Weise ist ein flexibler Einsatz des Schienenfahrzeugs auf unterschiedlichen Gleisen sichergestellt.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Schienenfahrzeug mit Anhängewagen vor dem Gleiskraftwagen
- Fig. 2: Schienenfahrzeug mit Anhängewagen hinter dem Gleiskraftwagen
- Fig. 3: Gleiskraftwagen und Anhängewagen im autonomen Betrieb
- Fig. 4: Schienenfahrzeug mit Versorgung aus der Energiespeichereinrichtung
- Fig. 5: Blockschaltbild der Energieversorgung

### Beschreibung der Ausführungsformen

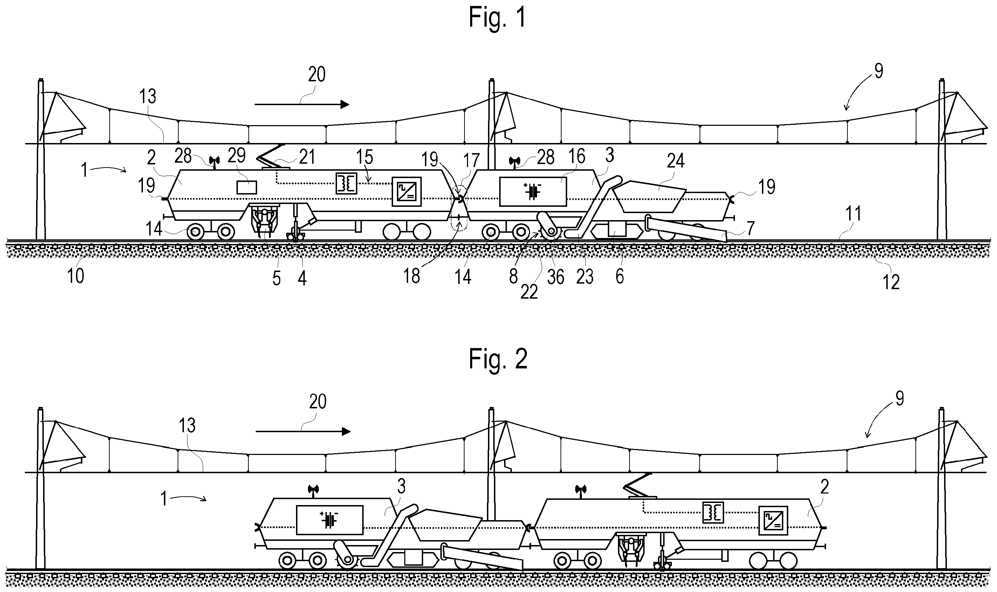

Das in den Figuren 1 bis 4 dargestellte Schienenfahrzeug 1 besteht aus zwei im Betrieb voneinander trennbaren Teilen, nämlich einem Gleiskraftwagen 2 und einem Anhängewagen 3. Jeder Teil umfasst eigene Bearbeitungseinrichtungen 4-8, die zur Durchführung von Arbeiten an einer Gleisanlage 9 ausgebildet sind. Im dargestellten Beispiel ist der Gleiskraftwagen 2 eine Stopfmaschine mit einem Hebe-/Richtaggregat 4 und einem Stopfaggregat 5. Der Anhängewagen 3 ist eine Schotterplaniermaschine mit einem Mittelpflug 6, einem Flankenpflug 7 und einer Kehreinrichtung 8.

Diese Ausprägung der Erfindung eignet sich für die Durcharbeitung eines Schottergleises, bei dem ein aus Schwellen 10 und darauf befestigten Schienen 11 bestehender Gleisrost in einem Schotterbett 12 gelagert ist. Die Erfindung umfasst auch andere Varianten, beispielsweise einen Gleiskraftwagen 2 und einen Anhängewagen 3 mit einem Kran und einer Hebebühne als Bearbeitungseinrichtungen. Damit ist die Instandhaltung einer Oberleitung 13 mit unterschiedlichen Arbeitsschritten durchführbar. Ein anderes nicht dargestelltes Beispiel ist eine Stopfmaschine als Gleiskraftwagen 2 und ein Dynamischer Gleisstabilisator, eine Schienenschleifmaschine oder eine Schienenfräsmaschine als Anhängewagen 3.

Erfindungsgemäß umfasst der Gleiskraftwage 2 insbesondere einen elektrischen Traktionsantrieb 14 und eine Energieversorgungseinrichtung 15 zur Bereitstellung elektrischer Energie. Der Anhängewagen 3 umfasst eine Energiespeichereinrichtung 16, aus der ein elektrischer Traktionsantrieb 14 und Bearbeitungseinrichtungen 6, 7, 8 des Anhängewagens 3 mit elektrischer Energie versorgt werden. Damit ist jeder Teil 2, 3 des Schienenfahrzeugs 1 vorübergehend autark für Gleisarbeiten einsetzbar.

Für diverse Gleisarbeiten und für Überstellfahrten ist der Anhängewagen 3 mittels einer Koppelvorrichtung 17 an den Gleiskraftwagen 2 gekoppelt. In diesem Betriebsmodus bildet der Gleiskraftwagen 2 und der Anhängewagen 3 integrale Teile einer Gleisbaumaschine. Die Koppelvorrichtung 17 umfasst mechanische Verbindungselemente 18 zur Übertragung von Traktionskräften und elektrische Verbindungselemente 19 zur Übertragung von elektrischer Energie. Gegebenenfalls sind auch pneumatische und hydraulische Verbindungelemente umfasst.

Vorteilhafterweise ist die Koppelvorrichtung 17 automatisch und/oder ferngesteuert betätigbar. Auf diese Weise sind eine Entkoppelvorgang sowie ein Koppelvorgang jederzeit ohne Arbeitsunterbrechung durchführbar. Zum Beispiel umfasst die Koppelvorrichtung 17 eine Mittelpufferkupplung und eine elektrische Schnittstelle, wobei trennbare Verbindungselemente 18, 19 mittels Führungseinrichtungen selbsttätig ineinandergreifen. Ein Lösen der Koppelvorrichtung 17 erfolgt beispielsweise durch ferngesteuerte Freigabe von Arretierungen der verbundenen Elemente 18, 19. Bevorzugt ist an jeder Stirnseite des Gleiskraftwagens 2 und des Anhängewagens 3 eine solche Koppelvorrichtung 17 angeordnet.

Verschiedene Betriebsvarianten werden anhand der in den Figuren 1-4 dargestellten Beispielen erläutert. Hier besteht das Schienenfahrzeug 1 aus einer Stopfmaschine und einer Schotterplaniermaschine. In Fig. 1 ist der Anhängewagen 3 mit dem Gleiskraftwagen 2 gekoppelt, wobei der Anhängewagen 3 in einer Arbeitsrichtung 20 führend ist. Das gesamte Schienenfahrzeug 1 wird mittels eines Stromabnehmers 21 aus einer spannungsführenden Oberleitung 13 mit elektrischer Energie versorgt. Dabei wird zusätzlich zur Versorgung der Traktionsantriebe 14 und der Bearbeitungseinrichtungen 4-8 die Energiespeichereinrichtung 16 aufgeladen.

Der Betriebsmodus gemäß Fig. 1 eignet sich zur Umschichtung von Schotter für einen nachfolgenden Stopfvorgang. Die beidseits angeordneten Flankenpflüge 7 befördern vorgelagerten oder überschüssigen Schotter in Richtung Gleismitte, wo mittels des Mittelpflugs 6 weitere Schotterumlagerungen erfolgen. Auf diese Weise werden die Schwellen 10 eingeschottert, damit für eine nachfolgende Gleisanhebung genug Schotter zum Unterstopfen der Schwellen 10 vorhanden ist.

Fig. 2 zeigt das Schienenfahrzeug 1 ebenfalls im gekoppelten Zustand wobei hier der Gleiskraftwagen 1 in Arbeitsrichtung 20 führend ist. Aus der Oberleitung 13 werden die Antriebe mit elektrischer Energie versorgt und die Energiespeichereinrichtung 15 des Anhängewagens 3 aufgeladen. In dieser Betriebsart erfolgt beispielsweise ein Kehrvorgang der bereits unterstopften Schwellen 10 mittels der Kehranlage 8. Eine Kehrbürste 22 kehrt überschüssigen Schotter auf ein Förderband 23 zum Transport in einen Schotterspeicher 24. Dieser zwischengespeicherte Schotter kann später über Schurren auf Gleisstellen mit Schottermangel aufgebracht werden.

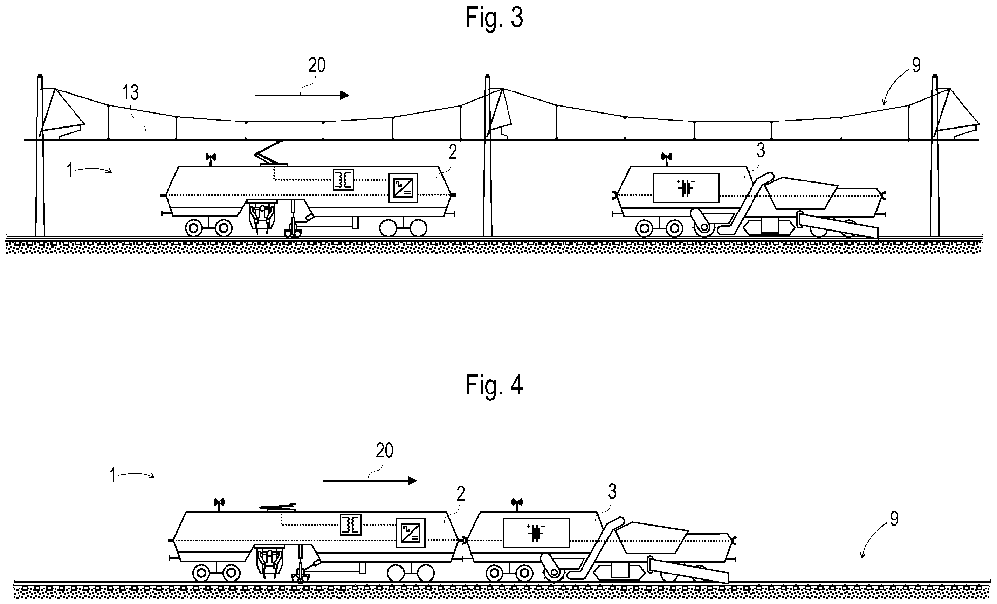

Ein wesentlicher Aspekt der Erfindung ist die Möglichkeit, den Gleiskraftwagen 2 und den Anhängewagen 3 vorübergehend als autarke Gleisbaumaschinen zu betreiben. Diese getrennte Betriebsart ist in Fig. 3 dargestellt. Der als Schotterplaniermaschine ausgebildete Anhängewagen 3 fährt vor dem als Stopfmaschine ausgebildeten Gleiskraftwagen 2. Beide sind mit unterschiedlichen Vorwärtsgeschwindigkeiten in Betrieb, wobei sich die Stopfmaschine zyklisch von Schwelle 10 zu Schwelle 10 vorwärtsbewegt. Davon unabhängig bewegt sich die Schotterplaniermaschine mit einer konstanten Geschwindigkeit vorwärts. Dabei darf eine Mindestgeschwindigkeit nicht unterschritten werden, damit die Pflüge 6, 7 einen dynamischen Schottertransport bewirken.

Der Anhängewagen 3 wird in dieser getrennten Betriebsart ausschließlich aus der Energiespeichereinrichtung 16 mit elektrischer Energie versorgt, während der Gleiskraftwagen 2 weiterhin über die Oberleitung 13 versorgbar ist. Bei abgeschalteter oder fehlender Oberleitung 13 wird der Gleiskraftwagen 2 beispielsweise mittels eines Verbrennungsmotors 25 betrieben. Ein mit dem Verbrennungsmotor 25 gekoppelter Generator 26 liefert elektrische Energie für den Traktionsantrieb 14 und diverse elektrische Antriebe 27 der Bearbeitungseinrichtungen 4, 5. Zusätzlich oder als Alternative ist auch im Gleiskraftwagen 2 ein elektrischer Energiespeicher vorhanden, um Unterbrechungen der Oberleitung 13 zu überbrücken.

Vorteilhafterweise besteht zwischen dem autark betriebenen Anhängewagen 3 und dem Gleiskraftwagen 2 eine kabellose Datenverbindung 28. Beispielsweise werden über diese Datenverbindung 28 Steuerbefehle einer übergeordnete Steuerungseinrichtung 29 übertragen, um einen automatisierten Betrieb der beiden Wagen 2, 3 zu koordinieren.

Im gekoppelten Betrieb dient die übergeordneten Steuerungseinrichtung 29 zur gemeinsamen Ansteuerung der Energieversorgungseinrichtung 15 und der Energiespeichereinrichtung 16, um den Austausch elektrischer Energie zu steuern bzw. zu regeln. Vorteilhafterweise kann bei bestehender Kopplung das ganze Schienenfahrzeug 1 aus der Energiespeichereinrichtung 16 des Anhängewagens 3 mit elektrischer Energie versorgt werden, wie in Fig. 4 dargestellt. Auf diese Weise ist auch ohne eigenem Energiespeicher im Gleiskraftwagen 2 ein abgasfreier Betrieb bei fehlender oder abgeschalteter Oberleitung 13 sichergestellt. Das Schienenfahrzeug 1 ist für Arbeitseinsätze mit regelmäßiger Nutzung dieser Betriebsart auslegbar, indem die Energiespeichereinrichtung 16 entsprechend größer dimensioniert wird.

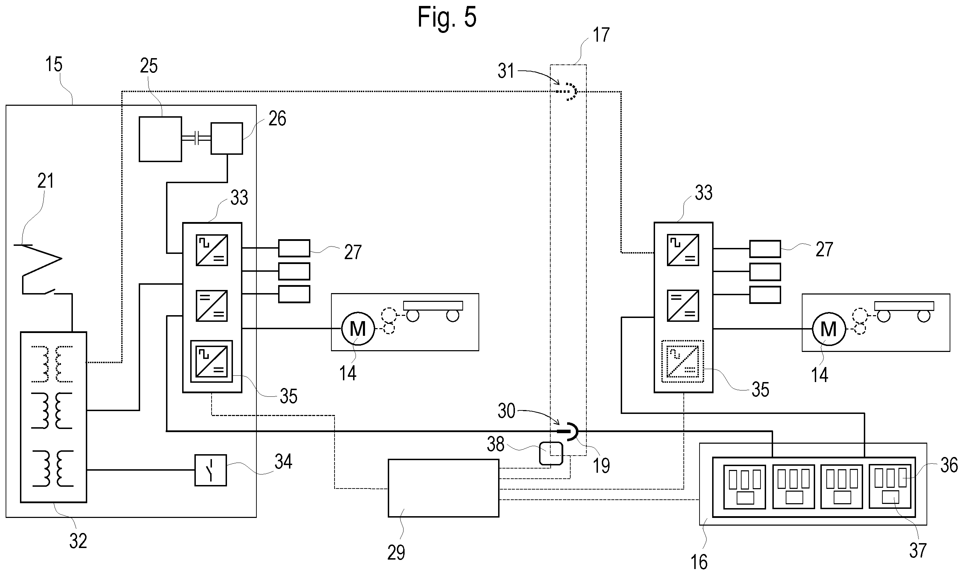

Das Blockschaltbild in Fig. 5 zeigt eine bespielhafte Schaltung der Energieversorgungseinrichtung 15 und der Energiespeichereinrichtung 16. In der Darstellung ist der Anhängewagen 3 an den Gleiskraftwagen 2 gekoppelt, wobei ein elektrischen Anschluss 30 zur Übertragung von elektrischer Energie angeordnet ist. In einer Variante ist alternativ dazu oder als Ergänzung ein weiterer elektrischer Anschluss 31 vorgesehen.

Der Gleiskraftwagen 2 wird vorzugsweise über den Stromabnehmer 21 aus der Oberleitung 13 versorgt. Alternativ dazu kann die Versorgung mittels des Generators 26 erfolgen. Im ersten Fall wird eine Transformatorschaltung 32 mittels des Stromabnehmers 21 an die Oberleitung 13 geschaltet. Ein Ausgang der Transformatorschaltung 32 ist mit dem Eingang einer Umrichterschaltung 33 des Gleiskraftwagens 2 verbunden. Zudem besteht eine Verbindung zwischen der Transformatorschaltung 32 und einem Erdungsmodul 34. Im zweiten Fall ist die Umrichterschaltung 33 an den Generator 26 geschaltet.

Die Umrichterschaltung 33 umfasst Wechselrichter und Gleichrichter zur Umwandlung von Wechsel- bzw. Drehstrom in Gleichstrom und umgekehrt. Zudem umfasst die Umrichterschaltung 33 in der mit durchgehenden Linien dargestellten Variante eine Ladeschaltung 35 für die Energiespeichereinrichtung 16 des Anhängewagens 3. Mit gepunkteten Linien ist eine Alternative dargestellt, bei der die Ladeschaltung 35 in einer Umrichterschaltung 33 des Anhängewagens 3 angeordnet ist.

An die Umrichterschaltungen 33 des Gleiskraftwagens 2 und des Anhängewagens 3 sind jeweils die elektrischen Traktionsantriebe 14 und Arbeitsantriebe 27 der Bearbeitungseinrichtungen 4-8 angeschlossen. Über den elektrischen Anschluss 30 ist die Energiespeichereinrichtung 16 mit der Ladeschaltung 35 im Gleiskraftwagen 2 verbunden. In der mit punktierten Linien eingezeichneten Variante besteht eine Verbindung mit der im Anhängewagen 3 angeordneten Ladeschaltung 35.

Die Energiespeichereinrichtung 16 umfasst mehrere Batteriezellen 36 mit einer eigenen Ladeelektronik 37. Zur Überwachung, Regelung und zum Schutz der Batteriezellen 37 ist ein Batteriemanagementsystem eingerichtet, das die Ladeelektronik 38 und die Ladeschaltung 35 umfasst. Eine koordinierte Ansteuerung der zusammenwirkenden Schaltungselemente 33, 35, 37 erfolgt vorteilhafterweise mittels der übergeordneten Steuerungseinrichtung 29. Dabei umfasst die Koppelvorrichtung 17 eine Sensoreinrichtung 38, die der Steuerungseinrichtung 29 signalisiert, ob ein gekoppelter Zustand vorliegt. Auf diese Weise erfolgt bei einem automatisierten Koppelvorgang bzw. einer automatisierten Entkopplung die Aktivierung der entsprechenden Betriebsart durch die Steuerungseinrichtung 29.

In einem Standardbetrieb wird die Energiespeichereinrichtung 16 im gekoppelten Zustand mittels der Energieversorgungseinrichtung 15 des Gleiskraftwagens 2 aufgeladen. Nach einer Entkopplung des Anhängewagens 3 vom Gleiskraftwagen 2 erfolgt die Versorgung des Traktionsantriebs 14 und der Arbeitsantriebe 27 des Anhängewagens 3 aus der Energiespeichereinrichtung 16. Die Kapazität der Energiespeichereinrichtung 16 ist für einen Anwendungsfall ausgelegt, der eine maximale Betriebsdauer im entkoppelten Zustand erfordert.

## Patentansprüche

1. Verfahren zum Durchführen von Arbeiten an einer Gleisanlage (9) mit einem Schienenfahrzeug (1), das einen Gleiskraftwagen (2) mit mindestens einer elektrisch betreibbaren Bearbeitungseinrichtung (4, 5) und einer Energieversorgungseinrichtung (15) zur Bereitstellung elektrischer Energie, sowie einen an den Gleiskraftwagen (2) angekoppelten Anhängewagen (3) mit einer Energiespeichereinrichtung (16) zur Bereitstellung elektrischer Energie umfasst, wobei das Schienenfahrzeug (1) zu einer zu bearbeitenden Gleisstelle gefahren wird, wobei der Anhängewagen (3) vom Gleiskraftwagen (2) entkoppelt wird und wobei die zu bearbeitende Gleisstelle mittels des Gleiskraftwagens (2) bearbeitet wird, **dadurch gekennzeichnet, dass** vor und/oder nach der Bearbeitung mittels des Gleiskraftwagens (2) die Gleisstelle mittels des Anhängewagens (3) bearbeitet wird, indem ein elektrischer Traktionsantrieb (14) des Anhängewagens (3) und eine Bearbeitungseinrichtung (6-8) des Anhängewagens (3) aus der Energiespeichereinrichtung (16) mit elektrischer Energie versorgt werden.

2. Verfahren nach Anspruch 1, **dadurch gekennzeichnet, dass** der Gleiskraftwagen (2) über einen Stromabnehmer (21) aus einer Oberleitung (13) mit elektrischer Energie versorgt wird.

3. Verfahren nach Anspruch 1 oder 2, **dadurch gekennzeichnet, dass** die Energiespeichereinrichtung (16) des Anhängewagens (3) im gekoppelten Zustand über die Energieversorgungseinrichtung (15) des Gleiskraftwagens (2) aufgeladen wird.

4. Verfahren nach einem der Ansprüche 1 bis 3, **dadurch gekennzeichnet, dass** mittels des Anhängewagens (3) in einer Ausgestaltung als Schotterplaniermaschine während einer Gleisbearbeitung ein gewünschtes Schotterprofil hergestellt wird.

5. Verfahren nach einem der Ansprüche 1 bis 4, **dadurch gekennzeichnet, dass** mittels des Gleiskraftwagens (2) in einer Ausgestaltung als Stopfmaschine während einer Gleisbearbeitung Schwellen (10) unterstopft werden und dass dabei insbesondere die gesamte Stopfmaschine zyklisch vorwärtsbewegt wird.

6. Verfahren nach einem der Ansprüche 1 bis 5, **dadurch gekennzeichnet, dass** der Anhängewagen (3) während eines Bearbeitungsbetriebs mittels einer automatisierten und/oder fernsteuerbaren Koppelvorrichtung (17) von dem Gleiskraftwagen (2) entkoppelt und nach einer Gleisbearbeitung wieder an den Gleiskraftwagen (2) gekoppelt wird.

7. Verfahren nach einem der Ansprüche 1 bis 6, **dadurch gekennzeichnet, dass** zwischen dem Gleiskraftwagen (2) und dem Anhängewagen (3) Steuerungsdaten über eine kabellose Datenverbindung (28) ausgetauscht werden.

8. Verfahren nach einem der Ansprüche 1 bis 7, **dadurch gekennzeichnet, dass** das gesamte Schienenfahrzeug (1) im gekoppelten Betrieb aus der Energiespeichereinrichtung (16) des Anhängewagens (3) mit elektrischer Energie versorgt wird.

9. Schienenfahrzeug (1) zur Durchführung eines Verfahrens nach einem der Ansprüche 1 bis 8, umfassend einen Gleiskraftwagen (2) mit mindestens einer elektrisch betreibbaren Bearbeitungseinrichtung (4, 5) und einer Energieversorgungseinrichtung (15) zur Bereitstellung von elektrischer Energie sowie einen Anhängewagen (3) mit einer Energiespeichereinrichtung (16) zur Bereitstellung von elektrischer Energie, **dadurch gekennzeichnet, dass** der Anhängewagen (3) einen eigenen Traktionsantrieb (14) und eine eigene elektrisch betreibbare Bearbeitungseinrichtung (6-8) umfasst.

10. Schienenfahrzeug (1) nach Anspruch 9, **dadurch gekennzeichnet, dass** der Anhängewagen (3) als Schotterplaniermaschine ausgebildet ist, welche insbesondere einen Mittelpflug (6), einen Flankenpflug (7), eine Kehrbürste (8) und einen Schotterspeicher (24) umfasst.

11. Schienenfahrzeug (1) nach Anspruch 9 oder 10, **dadurch gekennzeichnet, dass** der Gleiskraftwagen (2) als Stopfmaschine ausgebildet ist, welche insbesondere zur zyklischen Vorfahrt von Schwelle (10) zu Schwelle (10) vorgesehen ist.

12. Schienenfahrzeug (1) nach einem der Ansprüche 9 bis 11, **dadurch gekennzeichnet, dass** zur Koppelung des Anhängewagens (3) an den Gleiskraftwagen (2) eine automatisiert und/oder ferngesteuert betätigbare Koppelvorrichtung (17) mit mechanischen Verbindungselementen (18) und mit elektrischen Verbindungselementen (19) angeordnet ist und dass insbesondere sowohl am Gleiskraftwagen (2) als auch am Anhängewagen (3) an beiden Stirnseiten eine solche Koppelvorrichtung (17) angeordnet ist.

13. Schienenfahrzeug (1) nach Anspruch 12, **dadurch gekennzeichnet, dass** als Koppelvorrichtung (17) eine Mittelpufferkupplung mit einer elektrischen Schnittstelle angeordnet ist.

14. Schienenfahrzeug (1) nach einem der Ansprüche 9 bis 13, **dadurch gekennzeichnet, dass** der Gleiskraftwagen (2) einen Stromabnehmer (21) zur elektrischen Energieversorgung aus einer Oberleitung (13) umfasst.

15. Schienenfahrzeug (1) nach einem der Ansprüche 9 bis 14, **dadurch gekennzeichnet, dass** der Gleiskraftwagen (2) einen Verbrennungsmotor (25) und einen damit gekoppelten Generator (26) zur elektrischen Energieversorgung umfasst.

## Claims

1. A method for carrying out work on a railway track (9) by means of a rail vehicle (1), comprising a track motor vehicle (2) with at least one electrically operable treatment device (4, 5) and an energy supply device (15) for providing electrical energy, as well as a trailer wagon (3) coupled to the track motor vehicle (2) with an energy storage device (16) for providing electrical energy, with the rail vehicle (1) being driven to a track point to be treated, with the trailer wagon (3) being decoupled from the track motor vehicle (2), and with the track point to be treated being treated by means of the track motor vehicle (2), **characterized in that** before and/or after treatment by means of the track motor vehicle (2), the track point is treated by means of the trailer wagon (3) by supplying an electric traction drive (14) of the trailer wagon (3) and a treatment device (6-8) of the trailer wagon (3) with electrical energy from the energy storage device (16).

2. A method according to claim 1, **characterized in that** the track motor vehicle (2) is supplied with electrical energy from an overhead contact line (13) via a pantograph (21).

3. A method according to claim 1 or 2, **characterized in that** the energy storage device (16) of the trailer wagon (3) is charged in the coupled state via the energy supply device (15) of the track motor vehicle (2).

4. A method according to one of the claims 1 to 3, **characterized in that** the trailer wagon (3) designed as a ballast regulating machine is used to produce a desired ballast profile during a track treatment operation.

5. A method according to one of the claims 1 to 4, **characterized in that** sleepers (10) are tamped during a track treatment operation using the track motor vehicle (2) designed as a tamping machine and that the entire tamping machine, in particular, is moved forwards cyclically.

6. A method according to one of the claims 1 to 5, **characterized in that** the trailer wagon (3) is decoupled from the track motor vehicle (2) during a treatment operation by means of an automatically and/or remotely controlled coupling device (17) and is recoupled to the track motor vehicle (2) after track treatment has been carried out.

7. A method according to one of the claims 1 to 6, **characterized in that** control data is exchanged via a wireless data connection (28) between the track motor vehicle (2) and the trailer wagon (3).

8. A method according to one of the claims 1 to 7, **characterized in that** the entire rail vehicle (1) is supplied with electrical energy from the energy storage device (16) of the trailer wagon (3) during coupled operation.

9. A rail vehicle (1) for carrying out a method according to one of the claims 1 to 8, comprising a track motor vehicle (2) with at least one electrically operable treatment device (4, 5) and an energy supply device (15) for providing electrical energy as well as a trailer wagon (3) with an energy storage device (16) for providing electrical energy, **characterized in that** the trailer wagon (3) comprises its own traction drive (14) and its own electrically operable treatment device (6-8).

10. A rail vehicle (1) according to claim 9, **characterized in that** the trailer wagon (3) is designed as a ballast regulating machine, which in particular comprises a centre plough (6), a shoulder plough (7), a sweeper brush (8), and a ballast hopper (24).

11. A rail vehicle (1) according to claim 9 or 10, **characterized in that** the track motor vehicle (2) is designed as a tamping machine, which is intended in particular for cyclic forward movement from sleeper (10) to sleeper (10).

12. A rail vehicle (1) according to one of the claims 9 to 11, **characterized in that** an automatically and/or remotely controlled coupling device (17) with mechanical connecting elements (18) and with electrical connecting elements (19) is arranged for coupling the trailer wagon (3) to the track motor vehicle (2) and that, in particular, such a coupling device (17) is arranged on both ends of both the track motor vehicle (2) and the trailer wagon (3).

13. A rail vehicle (1) according to claim 12, **characterized in that** a central buffer coupler with an electric interface is arranged as a coupling device (17).

14. A rail vehicle (1) according to one of the claims 9 to 13, **characterized in that** the track motor vehicle (2) comprises a pantograph (21) for the electrical energy supply from an overhead contact line (13).

15. A rail vehicle (1) according to one of the claims 9 to 14, **characterized in that** the track motor vehicle (2) comprises an internal combustion engine (25) and a generator (26) coupled thereto for electrical energy supply.

## Revendications

1. Procédé de réalisation de travaux sur une installation de voie (9) avec un véhicule ferroviaire (1), qui comprend une draisine motorisée (2) avec au moins une installation d'usinage pouvant être exploitée électriquement (4, 5) et une installation d'alimentation en énergie (15) pour la mise à disposition d'énergie électrique, ainsi qu'un wagon remorqué (3) attelé à la draisine motorisée (2) avec une installation d'accumulateur d'énergie (16) pour la mise à disposition d'énergie électrique, dans lequel le véhicule ferroviaire (1) est conduit à un point de la voie à usiner, dans lequel le wagon remorqué (3) est désattelé de la draisine motorisée (2) et dans lequel le point de la voie à usiner est usiné au moyen de la draisine motorisée (2), **caractérisé en ce que** le point de la voie est usiné au moyen du wagon remorqué (3) avant et/ou après l'usinage au moyen de la draisine motorisée (2) **en ce qu'**un entraînement de traction électrique (14) du wagon remorqué (3) et une installation d'usinage (6 à 8) du wagon remorqué (3) sont alimentés en énergie électrique à partir de l'installation d'accumulateur d'énergie (16).

2. Procédé selon la revendication 1, **caractérisé en ce que** la draisine motorisée (2) est alimentée en énergie électrique à partir d'une caténaire (13) par le biais d'un pantographe (21).

3. Procédé selon la revendication 1 ou 2, **caractérisé en ce que** l'installation d'accumulateur d'énergie (16) du wagon remorqué (3) est chargée à l'état attelé par le biais de l'installation d'alimentation en énergie (15) de la draisine motorisée (2).

4. Procédé selon une des revendications 1 à 3, **caractérisé en ce qu'**un profil de ballast souhaité est fabriqué au moyen du wagon remorqué (3) dans une configuration en tant que machine de nivelage de ballast pendant un usinage de voie.

5. Procédé selon une des revendications 1 à 4, **caractérisé en ce que** des traverses (10) subissent un bourrage inférieur au moyen de la draisine motorisée (2) dans une configuration en tant que machine de bourrage pendant un usinage de voie et que la machine de bourrage entière est ce faisant notamment déplacée vers l'avant de manière cyclique.

6. Procédé selon une des revendications 1 à 5, **caractérisé en ce que** le wagon remorqué (3) est désattelé de la draisine motorisée (2) pendant un fonctionnement d'usinage au moyen d'un dispositif d'attelage automatisé et/ou pouvant être commandé à distance (17) et de nouveau attelé à la draisine motorisée (2) après un usinage de voie.

7. Procédé selon une des revendications 1 à 6, **caractérisé en ce que** des données de commande sont échangées par le biais d'une connexion de données sans fil (28) entre la draisine motorisée (2) et le wagon remorqué (3).

8. Procédé selon une des revendications 1 à 7, **caractérisé en ce que** le véhicule ferroviaire entier (1) est alimenté en énergie électrique dans le fonctionnement attelé à partir de l'installation d'accumulateur d'énergie (16) du wagon remorqué (3).

9. Véhicule ferroviaire (1) pour la réalisation d'un procédé selon une des revendications 1 à 8, comprenant une draisine motorisée (2) avec au moins une installation d'usinage pouvant être exploitée électriquement (4, 5) et une installation d'alimentation en énergie (15) pour la mise à disposition d'énergie électrique, ainsi qu'un wagon remorqué (3) avec une installation d'accumulateur d'énergie (16) pour la mise à disposition d'énergie électrique, **caractérisé en ce que** le wagon remorqué (3) comprend son propre entraînement de traction (14) et sa propre installation d'usinage pouvant être exploitée électriquement (6 à 8).

10. Véhicule ferroviaire (1) selon la revendication 9, **caractérisé en ce que** le wagon remorqué (3) est réalisé en tant que machine de nivelage de ballast qui comprend notamment une charrue centrale (6), une charrue latérale (7), une brosse de balayage (8) et un stockage de ballast (24).

11. Véhicule ferroviaire (1) selon la revendication 9 ou 10, **caractérisé en ce que** la draisine motorisée (2) est réalisée en tant que machine de bourrage qui est notamment prévue pour l'avancée cyclique d'une traverse (10) à l'autre.

12. Véhicule ferroviaire (1) selon une des revendications 9 à 11, **caractérisé en ce qu'**un dispositif d'attelage automatisé et/ou pouvant être actionné de manière commandée à distance (17) avec des éléments de connexion mécaniques (18) et avec des éléments de connexion électriques (19) est disposé sur la draisine motorisée (2) pour l'attelage du wagon remorqué (3), et qu'un tel dispositif d'attelage (17) est notamment disposé sur les deux côtés frontaux aussi bien sur la draisine motorisée (2) que sur le wagon remorqué (3).

13. Véhicule ferroviaire (1) selon la revendication 12, **caractérisé en ce qu'**un attelage tampon central avec une interface électrique est disposé en tant que dispositif d'attelage (17).

14. Véhicule ferroviaire (1) selon une des revendications 9 à 13, **caractérisé en ce que** la draisine motorisée (2) comprend un pantographe (21) pour l'alimentation en énergie électrique à partir d'une caténaire (13).

15. Véhicule ferroviaire (1) selon une des revendications 9 à 14, **caractérisé en ce que** la draisine motorisée (2) comprend un moteur à combustion interne (25) et un générateur couplé à celui-ci (26) pour l'alimentation en énergie électrique.
